# EUROPÄISCHE PATENTSCHRIFT

(11) **EP 3 515 167 B1**
(45) Veröffentlichungstag und Bekanntmachung des Hinweises auf die Patenterteilung: **07.07.2021**
(21) Anmeldenummer: 17772325.1
(22) Anmeldetag: 07.09.2017
(51) Int. Cl.: A01C 5/06, A01B 49/06

(54) **SÄMASCHINE ZUM AUSBRINGEN VON SAATGUT UND/ODER DÜNGER**
SOWING MACHINE FOR DISPENSING SEEDS AND/OR FERTILISER
SEMOIR PERMETTANT DE DISTRIBUER DES SEMENCES ET/OU DE L'ENGRAIS

(30) Priorität: 26.09.2016 DE 102016118093
(43) Veröffentlichungstag der Anmeldung: 31.07.2019
(73) Patentinhaber: Amazonen-Werke H. Dreyer SE & Co. KG, 49205 Hasbergen (DE)
(72) Erfinder: SCHWAMM, Victor, 49086 Osnabrück (DE)
(86) Internationale Anmeldenummer: PCT/EP2017/072439
(87) Internationale Veröffentlichungsnummer: WO 2018/054692

(56) Entgegenhaltungen:
- US-A- 779 143
- US-A- 3 117 541
- US-A- 4 700 641

## Beschreibung

Die Erfindung betrifft eine Sämaschine zum Ausbringen von Saatgut und/oder Dünger gemäß dem Oberbegriff des Patentanspruches 1.

Sämaschinen weisen regelmäßig mehrere Säschare zur Ablage von Saatgut und/oder Dünger und mehrere Striegelelemente zur Einbettung des abgelegten Saatguts und/oder Düngers auf.

Die Einbettung durch die Striegelelemente erfolgt dabei durch das Bedecken des Saatguts und/oder des Düngers mit loser Erde. Ferner kann die Einbettung das Andrücken der losen Erde umfassen.

Zur Optimierung der Saatgut- und/oder Düngereinbettung sind die Striegelelemente den Bodenverhältnissen anzupassen. Hierbei ist neben der Arbeitshöhe der Striegelelemente auch die Position der Striegelelemente in Bezug auf die Säschare zu berücksichtigen.

Hierzu schlägt die Druckschrift DE 10 2005 038 095 A1 eine Sämaschine mit einem Rahmen und mehreren daran beabstandet zueinander angeordneten Säscharen und auf dem Boden abrollenden scheibenartigen Rollen vor, die nebeneinander und beabstandet zueinander angeordnet sind. Um eine vereinfachte und von den Säscharen unabhängige Anordnung der Rollen zu erreichen, ist vorgesehen, dass die Rollen über Tragarme an einem quer zur Fahrtrichtung verlaufenden und am Rahmen befestigten Querträger angeordnet sind.

Ferner ist aus der Druckschrift DE 10 2010 000 527 A1 eine Sämaschine zum Ausbringen von Saatgut und/oder Düngemitteln bekannt, welche mehrere Säschare und mehrere Saatstriegel aufweist, wobei die Saatstriegel unmittelbar an den Säscharen einer hinteren Querreihe angeordnet sind, um eine vereinfachte Anordnung der den Boden einebnenden und die Säfurche mit Erdboden füllenden Striegelelemente zu schaffen. Weitere Sämaschinen sind offenbart in US 4 700 641 A, US 3 117 541 A und US 779 143 A.

Diese und andere bekannte Lösungen berücksichtigen jedoch nicht, dass der Boden, auf welchem das Saatgut und/oder der Dünger auszubringen ist, regelmäßig Unebenheiten aufweist, welche die Einbettungsgüte erheblich beeinflussen können.

Die der Erfindung zugrundeliegende Aufgabe besteht somit darin, eine Sämaschine bereitzustellen, deren Einbettungsgüte weniger stark von Bodenunebenheiten beeinflusst wird, als die der bekannten Sämaschinen.

Die Aufgabe wird gelöst mit einer Sämaschine gemäß Anspruch 1.

Die Erfindung macht sich die Erkenntnis zunutze, dass das eine oder die mehreren Striegelelemente der zumindest einen Striegelanordnung sich durch die Schwenkbarkeit um eine Schwenkachse, welche innerhalb einer in Fahrtrichtung ausgerichteten vertikalen Ebene verläuft, dem Boden erheblich besser anpassen können. Insbesondere bei unebenen und geneigten Bodenabschnitten führt die zusätzliche Schwenkbarkeit zu einer erheblichen Steigerung der Einbettungsgüte des durch die mehreren Säschare abgelegten Saatguts und/oder Düngers.

In einer bevorzugten Ausführungsform der erfindungsgemäßen Sämaschine ist die Schwenkachse gegenüber der Fahrtrichtung zur Horizontalen geneigt. Die Halterung des einen oder der mehreren Striegelelemente kann einen Tragarm umfassen, an welchem das Gelenk befestigt ist. Der Tragarm kann im Bereich der Gelenkbefestigung ebenfalls innerhalb einer in Fahrtrichtung ausgerichteten vertikalen Ebene und gegenüber der Fahrtrichtung zur Horizontalen geneigt verlaufen, um eine Federung für das eine oder die mehreren Striegelelemente in vertikaler Richtung umzusetzen. Die Befestigung des Gelenks an dem Tragarm, beispielsweise mittels Schrauben oder Verschweißen, kann auf besonders einfache Weise erfolgen, wenn die Schwenkachse des Gelenks im Bereich der Befestigung an dem Tragarm parallel zu dem Tragarm verläuft.

Die erfindungsgemäße Sämaschine wird ferner dadurch vorteilhaft weitergebildet, dass die zumindest eine Striegelanordnung über eine Halterung, vorzugsweise federnd, an einem Querbalken befestigt ist. Der Querbalken ist quer zur Fahrtrichtung ausgerichtet. Vorzugsweise sind mehrere Striegelanordnungen jeweils über eine Halterung an dem Querbalken befestigt und äquidistant voneinander beabstandet angeordnet. Vorzugsweise ist der Querbalken samt der einen oder der mehreren Striegelanordnungen um eine Querachse, welche quer zur Fahrtrichtung verläuft, auf und ab schwenkbar, sodass der Abstand des einen oder der mehreren Striegelelemente zum Boden und/oder das Druckniveau zwischen dem einen oder den mehreren Striegelelementen und dem Boden angepasst werden kann. Die eine oder die mehreren Halterungen umfassen vorzugsweise einen elastisch verformbaren Tragarm, welcher mit dem Querbalken verschraubt oder verschweißt ist und einen gebogenen Abschnitt zur Steigerung der Elastizität aufweist.

In einer vorteilhaften Ausführungsform der erfindungsgemäßen Sämaschine ist die zumindest eine Striegelanordnung über eine Halterung, vorzugsweise federnd, an einer der mehreren Säschare befestigt. Dadurch, dass die zumindest eine Striegelanordnung direkt an einer der mehreren Säschare befestigt ist, kann die Maschinenlänge erheblich verkürzt werden, da eine separate Befestigung der zumindest einen Striegelanordnung an dem Maschinenrahmen entfällt. Außerdem wird somit die Ausrichtung des einen oder der mehreren Striegelelemente zu den Säscharen vereinfacht.

In einer weiteren Ausführungsform ist das Gelenk an der Halterung angeordnet. Erfindungsgemäß weist das Gelenk ein Trägerelement auf, welches einen U-förmigen Abschnitt umfasst. Die gegenüberliegenden Segmente des U-förmigen Abschnitts weisen jeweils ein Durchgangsloch gleichen Durchmessers auf, wobei die Durchgangslöcher koaxial angeordnet sind. Durch die Durchgangslöcher erstreckt sich eine drehbare Welle, welche gegen axiale Verschiebung gesichert ist. Die Welle ist mit der zumindest einen Striegelanordnung verbunden, sodass durch die Drehbarkeit der Welle die Schwenkbarkeit der Striegelanordnung und somit auch die Schwenkbarkeit des einen oder der mehreren Striegelelemente umgesetzt werden.

In einer anderen Ausführungsform der erfindungsgemäßen Sämaschine ist das Gelenk mit der Halterung zerstörungsfrei und reversibel lösbar verbunden. Dadurch, dass das Gelenk mit der Halterung zerstörungsfrei und reversibel lösbar verbunden ist, werden Wartungs- und Reparaturarbeiten erheblich vereinfacht. Insbesondere im Fall der Beschädigung eines Bauteils erlaubt die zerstörungsfrei und reversibel lösbare Verbindung einen schnellen Austausch des beschädigten Bauteils, wodurch auch die Reparatur- und Instandhaltungskosten erheblich verringert werden.

Bevorzugt ist ferner eine Sämaschine, bei welcher das Gelenk mit der zumindest einen Striegelanordnung zerstörungsfrei und reversibel lösbar verbunden ist. Dadurch, dass das Gelenk mit der zumindest einen Striegelanordnung zerstörungsfrei und reversibel lösbar verbunden ist, werden Wartungs- und Reparaturarbeiten erheblich vereinfacht. Insbesondere im Fall der Beschädigung eines Bauteils erlaubt die zerstörungsfrei und reversibel lösbare Verbindung einen schnellen Austausch des beschädigten Bauteils, wodurch auch die Reparatur- und Instandhaltungskosten erheblich verringert werden.

In der erfindungsgemäßen Sämaschine sind die Striegelelemente jeweils als Rollenstriegel ausgebildet. Vorzugsweise umfasst jeder Rollenstriegel eine Andrückrolle, welche die Saat und/oder den Dünger an den Grund einer zuvor erzeugten Furche drückt. Hierdurch wird ein besserer Bodenschluss erreicht, wodurch mehr Feuchtigkeit zum Keimen zur Verfügung steht. Außerdem kommt es zu einem Verschließen von Hohlräumen, wodurch der Zugang zum Saatgut und/oder zum Dünger für Schädlinge, beispielsweise bei Schneckenbefall, erschwert wird. Vorzugsweise ist der Rollenandruck auf den Boden einstellbar.

In einer nicht-erfindungsgemäßen Sämaschine sind die Striegelelemente jeweils als Striegelbalken ausgebildet. Durch die Striegelbalken erfolgt die Bedeckung der offenen Säfurchen sowie die Planierung auf strohfreien und strohreichen Flächen im Wesentlichen verstopfungsfrei. Vorzugsweise ist der Striegelandruck auf den Boden einstellbar. Insbesondere ist zumindest ein Abschnitt des auf dem Boden aufliegenden Striegelbalkens schräg zur Fahrtrichtung angestellt und/oder weist an seiner Unterseite eine im Wesentlichen parallel zum Boden verlaufende Oberfläche auf.

Erfindungsgemäß ist der Schwenkwinkel der zumindest einen Striegelanordnung um die Schwenkachse durch einen Anschlag begrenzt. Erfindungsgemäß wird der Anschlag durch einen Anschlagsabschnitt des Trägerelements ausgebildet, wobei sich der Anschlagsabschnitt des Trägerelements an den U-förmigen Abschnitt des Trägerelements anschließt. Da das eine oder die mehreren Striegelelemente jeweils als Rollenstriegel ausgebildet sind, schlägt der Anschlagsabschnitt des Trägerelements bei einem Schwenkgrenzwinkel vorzugsweise an der Achse des einen oder der mehreren Rollenstriegel oder an dem Achsgehäuse der Achse des einen oder der mehreren Rollenstriegel an. Insbesondere ist die zumindest eine Striegelanordnung in beide Schwenkrichtungen um denselben Schwenkwinkel verschwenkbar, bevor der Anschlag die weitere Schwenkbewegung begrenzt.

In einer weiteren Ausführungsform ist der Schwenkwinkel der zumindest einen Striegelanordnung einstellbar. Hierdurch kann die Schwenkwinkelbegrenzung beispielsweise auf verschiedene Bodenbeschaffenheiten eingestellt werden. Die Einstellung des Schwenkwinkels ist vorzugsweise manuell vornehmbar. Alternativ oder zusätzlich kann die Schwenkwinkelbegrenzung elektronisch, pneumatisch und/oder hydraulisch erfolgen.

In einer besonders bevorzugten Ausführungsfrom weist die zumindest eine Striegelanordnung exakt zwei beabstandet voneinander angeordnete Striegelelemente auf. Vorzugsweise sind die zwei Striegelelemente identisch ausgebildet. Dadurch, dass die zumindest eine Striegelanordnung exakt zwei beabstandet voneinander angeordnete Striegelelemente aufweist, wird die Systemkomplexität verringert und die Anzahl der Bauteile erheblich reduziert, da ein Gelenk zum Verschwenken von zwei Striegelelementen verwendet wird. Außerdem werden somit zwei Striegelelemente von einem Tragarm einer Halterung gehalten. Daraus resultiert ein reduzierter Materialeinsatz und eine vereinfachte und beschleunigte Montage der Sämaschine.

In einer vorteilhaften Weiterbildung der erfindungsgemäßen Sämaschine sind die zwei Striegelelemente der zumindest einen Striegelanordnung jeweils als Rollenstriegel ausgebildet und weisen eine gemeinsame Drehachse auf. Alternativ sind die zwei Striegelelemente der zumindest einen Striegelanordnung jeweils als Striegelbalken ausgebildet und parallel zueinander angeordnet. Dadurch, dass die Rollenstriegel der zumindest einen Striegelanordnung eine gemeinsame Drehachse aufweisen beziehungsweise die Striegelbalken der zumindest einen Striegelanordnung parallel zueinander angeordnet sind, wird ein übereinstimmender Bodenabsatz und ein übereinstimmender Anpressdruck auf den Boden in der nicht-verschwenkten Stellung erreicht, sodass die Sämaschine auch bei ebenen Böden eine gleichmäßige Einbettung hoher Güte erzeugt.

Außerdem ist eine erfindungsgemäße Sämaschine bevorzugt, bei welcher die Schwenkachse der zumindest einen Striegelanordnung mittig zwischen den zwei Striegelelementen der zumindest einen Striegelanordnung verläuft. Beim Verschwenken der zumindest einen Striegelanordnung wird das erste Striegelelement somit um den gleichen Betrag abgesenkt, um welchen das zweite Striegelelement angehoben wird. Da die zumindest eine Striegelanordnung jedoch von der federnden Halterung in Richtung des Bodens gedrückt wird, liegen stets beide Striegelelemente auf dem Boden auf. Die von der federnden Halterung auf die zumindest eine Striegelanordnung aufgebrachte Druckkraft wird durch die mittige Anordnung der Schwenkachse der zumindest einen Striegelanordnung zwischen den zwei Striegelelementen gleich auf die beiden Striegelelemente verteilt, wodurch eine gleichmäßige Bodenverdichtung erfolgt.

Weitere Einzelheiten der Erfindung sind der Figurenbeschreibung und den Zeichnungen zu entnehmen. Es zeigen
- Fig. 1: ein Ausführungsbeispiel der erfindungsgemäßen Sämaschine in einer schematischen Darstellung;
- Fig. 2: mehrere Striegelanordnungen einer erfindungsgemäßen Sämaschine in einer schematischen Darstellung;
- Fig. 3: mehrere Striegelanordnungen einer erfindungsgemäßen Sämaschine in einer schematischen Darstellung; und
- Fig. 4: Teile einer Striegelanordnung einer erfindungsgemäßen Sämaschine in einer schematischen Darstellung.

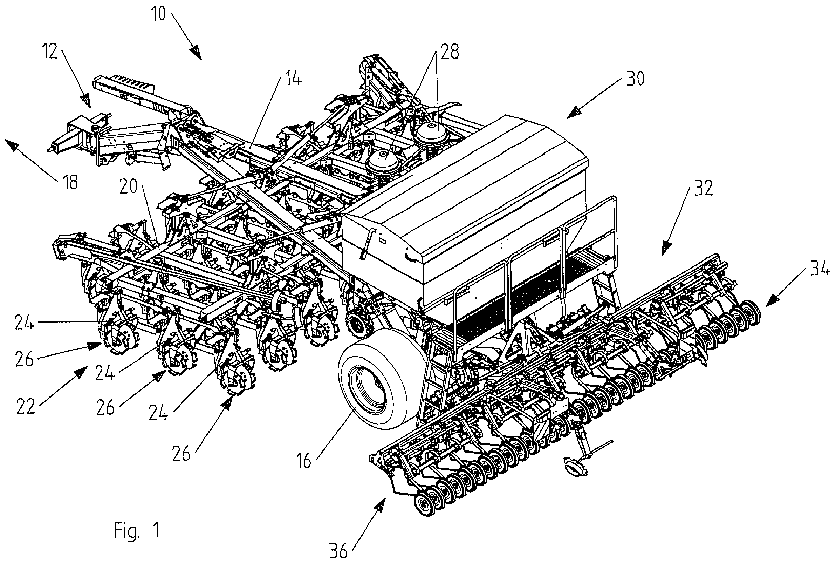

Die Fig. 1 zeigt eine Sämaschine 10 zum Ausbringen von Saatgut und/oder Dünger. Die Sämaschine 10 weist eine Zugdeichsel 12 auf, mittels welcher die Sämaschine 10 an eine Zugvorrichtung einer Zugmaschine, wie beispielsweise einem Traktor, ankuppelbar ist. Die Zugdeichsel 12 ist mit einem Hauptrahmen 14 verbunden. Der Hauptrahmen 14 stützt sich mit den Laufrädern 16 gegen den Boden ab. Die Ausrichtung der Laufräder 16 definiert die Fahrtrichtung 18 der Sämaschine 10.

Der Hauptrahmen 14 der Sämaschine 10 ist mit einem Zwischenrahmen 20 verbunden, wobei an dem Zwischenrahmen 20 insgesamt vier quer zur Fahrtrichtung 18 verlaufende Reihen von Säschareinheiten 22 angeordnet sind. Zwischen hintereinander angeordneten Reihen von Säschareinheiten 22 ist jeweils ein quer zur Fahrtrichtung 18 verlaufender durchgehender Freiraum ausgebildet.

Jede Säschareinheit 22 umfasst eine Säschare 24 und ein hinter der Säschare 24 angeordnetes Bügelrollenpaar 26. Die Säschare 24 sind als Meißelschare ausgebildet und in Parallelogrammen aufgehängt. Die Bügelrollenpaare 26 umfassen jeweils zwei Bügelrollen, wobei die Bügelrollen auf gegenüberliegenden Seiten der vom Meißel erzeugten Säfurche angeordnet und gegenüber der Säfurche geneigt ausgerichtet sind. Die Bügelrollenpaare 26 erzeugen jeweils einen Erdstrom in Richtung der Säfurche, wodurch eine erste Abdeckung der Säfurche mit Erdmaterial erfolgt.

Auf dem Hauptrahmen 14 ist außerdem ein Vorratsbehälter 30 für Saatgut und/oder Dünger angeordnet. Der Vorratsbehälter 30 kann beispielsweise eine oder zwei Kammern aufweisen, wobei der zwei Kammern aufweisende Vorratsbehälter 30 zur getrennten Bevorratung von Saatgut und Dünger dient. Der Vorratsbehälter 30 ist mit den Verteilerköpfen 28 verbunden, wobei den Verteilerköpfen 28 unter Verwendung von Druckluft das in dem Vorratsbehälter 30 befindliche Saatgut und/oder der in dem Vorratsbehälter 30 befindliche Dünger zugeleitet wird. Die Verteilerköpfe 28 verteilen das Saatgut und/oder den Dünger dann auf die Säschare 24, welche das Saatgut und/oder den Dünger in die Säfurche ablegen.

Hinter dem Vorratsbehälter 30 ist eine Einbettungseinrichtung 32 angeordnet, welche dazu eingerichtet ist, das von den Säscharen 24 abgelegte Saatgut und/oder den von den Säscharen 24 abgelegten Dünger im Erdreich einzubetten. Hierzu weist die Einbettungseinrichtung 32 eine Vielzahl von schwenkbaren Striegelanordnungen 34 auf, welche hinter einer Vielzahl von Striegelzinken 36 angeordnet sind.

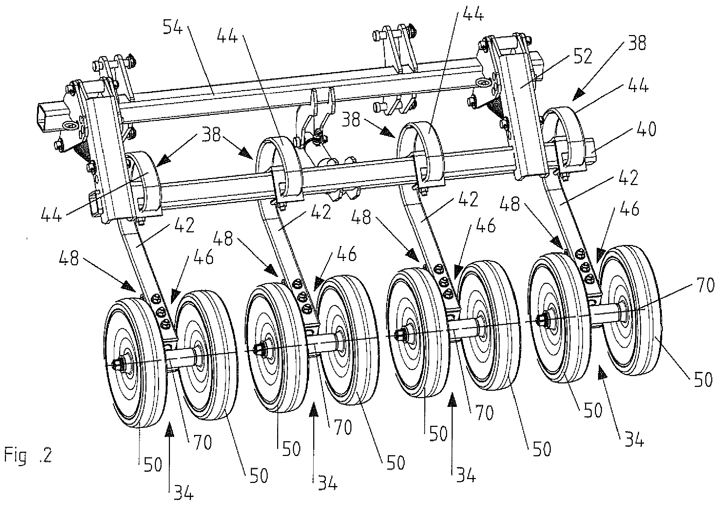

Die Fig. 2 zeigt insgesamt vier Striegelanordnungen 34, welche jeweils über eine federnde Halterung 38 an einem Querbalken 40 befestigt sind. Die vier

Striegelanordnungen 34 sind identisch ausgebildet und äquidistant voneinander beabstandet angeordnet. Die federnden Halterungen 38 umfassen jeweils einen elastisch verformbaren Tragarm 42, welcher einen gebogenen Abschnitt 44 zur Steigerung der Elastizität und einen geraden Abschnitt 46 zur Befestigung eines Gelenks 48 aufweist. Die Gelenke 48 sind jeweils mit drei Schrauben mit den geraden Abschnitten 46 der Tragarme 42 verschraubt. Das Gelenk 48 ist somit zerstörungsfrei und reversibel lösbar mit der Halterung 38 verbunden. Mittels der Gelenke 48 sind die einzelnen Striegelanordnungen 34 um eine Schwenkachse verschwenkbar, welche innerhalb einer in Fahrtrichtung 18 ausgerichteten vertikalen Ebene verläuft, wobei die Schwenkachse gegenüber der Fahrtrichtung 18 zur Horizontalen geneigt ist.

Die Gelenke 48 sind jeweils mit einer Striegelanordnung 34 zerstörungsfrei und reversibel lösbar verbunden. Die Striegelanordnungen 34 weisen jeweils exakt zwei beabstandet voneinander angeordnete Striegelelemente 50 auf, wobei die Striegelelemente 50 jeweils als Rollenstriegel ausgebildet sind und eine gemeinsame Drehachse 70 aufweisen.

Der Querbalken 40 ist über einen Bügel 52 mit einem weiteren Querbalken 54 verbunden. Der Querbalken 40 kann samt der Halterungen 38, der Gelenke 48 und der Striegelanordnungen 34 um eine horizontale Querachse verschwenkt werden. Dadurch lassen sich die als Rollenstriegel ausgebildeten Striegelelemente 50 zwischen einer Arbeitsstellung, in welcher die Striegelelemente 50 auf den Boden gedrückt werden, und einer Transportstellung, in welcher die Striegelelemente 50 beabstandet von dem Boden angeordnet sind, verfahren.

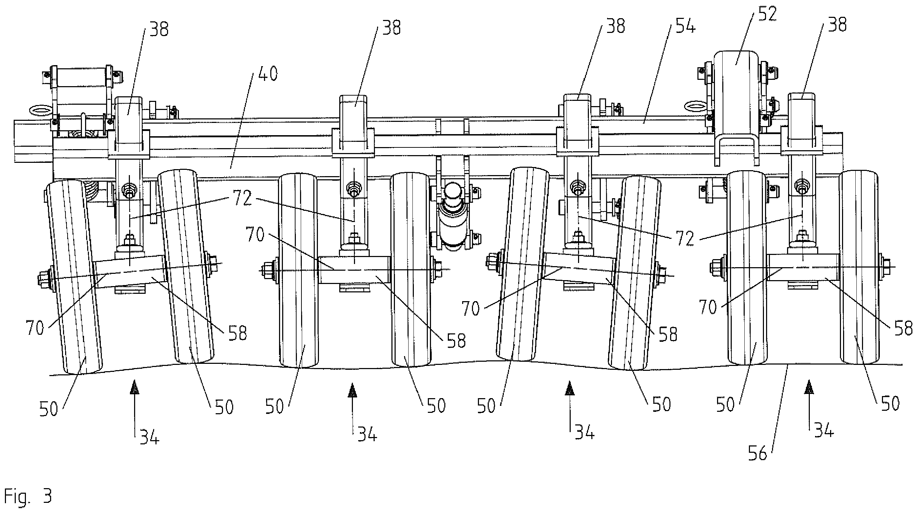

Die Fig. 3 zeigt die Anpassung der Striegelanordnungen 34 an die Unebenheiten eines Bodens 56. Die Anpassung der Striegelanordnungen 34 erfolgt über ein Verschwenken der einzelnen Striegelanordnungen 34 um deren Schwenkachse 72. Die Schwenkachse 72 der jeweiligen Striegelanordnungen 34 verläuft mittig zwischen den zwei als Rollenstriegel ausgebildeten Striegelelementen 50. Die Striegelanordnungen 34 werden jeweils von einer federnden Halterung 38, nämlich durch einen elastisch verformbaren Tragarm, auf den Boden 56 gedrückt.

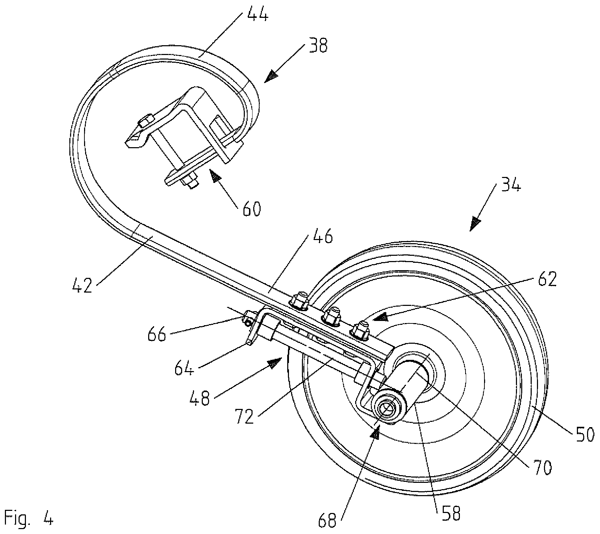

Die Fig. 4 zeigt, dass der Tragarm 42 der federnden Halterung 38 an der dem Striegelelement 50 abgewandten Seite eine Befestigung 60 aufweist, mittels welcher die Halterung 38 an einem Querbalken befestigbar ist. Die Befestigung 60 ist nach Art einer Schelle ausgeführt und kann über eine Schrauben-Mutter-Kombination an unterschiedliche Querbalkenstärken angepasst werden. Die Biegung des gebogenen Abschnitts 44 des Tragarms 42 erstreckt sich über etwa 270 Grad. Der gerade Abschnitt 46 des Tragarms 42 weist drei Durchgangsbohrungen auf, durch welche sich Schrauben 62 erstrecken. Mittels der Schrauben 62 ist der Tragarm 42 mit einem Trägerelement 64 des Gelenks 48 verbunden.

Das Trägerelement 64 umfasst einen U-förmigen Abschnitt, dessen gegenüberliegende Segmente jeweils ein Durchgangsloch gleichen Durchmessers aufweisen. Die Durchgangslöcher sind koaxial angeordnet. Durch die Durchgangslöcher erstreckt sich eine drehbare Welle 66, welche gegen axiale Verschiebung gesichert ist. Die Welle 66 ist mit der Striegelanordnung 34 verbunden. Durch die Drehbarkeit der Welle 66 wird somit die Schwenkbarkeit der Striegelanordnung 34 und somit auch die Schwenkbarkeit der zwei Striegelelemente 50 umgesetzt, von welchen aus Übersichtlichkeitsgründen nur ein Striegelelement 50 dargestellt ist.

An den U-förmigen Abschnitt des Trägerelements 64 schließt sich in Richtung der Striegelelemente 50 ein Anschlag 68 an. Der Anschlag 68 begrenzt den Schwenkwinkel der Striegelanordnung 34 um die Schwenkachse 72. Der Anschlag 68 des Trägerelements 64 schlägt bei einem Schwenkgrenzwinkel an dem Achsgehäuse 58 der gemeinsamen Achse der zwei Striegelelemente 50 an.

### Bezugszeichenliste

- 10: Sämaschine
- 12: Zugdeichsel
- 14: Hauptrahmen
- 16: Laufräder
- 18: Fahrtrichtung
- 20: Zwischenrahmen
- 22: Säschareinheiten
- 24: Säschare
- 26: Bügelrollenpaare
- 28: Verteilerköpfe
- 30: Vorratsbehälter
- 32: Einbettungseinrichtung
- 34: Striegelanordnungen
- 36: Striegelzinken
- 38: Halterungen
- 40: Querbalken
- 42: Tragarm
- 44: Tragarmabschnitt
- 46: Tragarmabschnitt
- 48: Gelenke
- 50: Striegelelemente
- 52: Bügel
- 54: Querbalken
- 56: Boden
- 58: Achsgehäuse
- 60: Befestigung
- 62: Schrauben
- 64: Trägerelement
- 66: Welle
- 68: Anschlag
- 70: Drehachse
- 72: Schwenkachse

## Patentansprüche

1. Sämaschine (10) zum Ausbringen von Saatgut und/oder Dünger, mit
- mehreren Säscharen (24) zur Ablage des Saatguts und/oder Düngers; und
- mehreren Striegelelementen (50) zur Einbettung des abgelegten Saatguts und/oder Düngers;
wobei die Striegelelemente (50) jeweils als Rollenstriegel ausgebildet sind, und wobei
zumindest eine Striegelanordnung (34), welche ein oder mehrere Striegelelemente (50) umfasst, mittels eines Gelenks (48) um eine Schwenkachse (72) verschwenkbar ist, welche innerhalb einer in Fahrtrichtung (18) ausgerichteten vertikalen Ebene verläuft;
**dadurch gekennzeichnet, dass** das Gelenk (48) ein Trägerelement (64) mit einem U-förmigen Abschnitt aufweist, wobei
der Schwenkwinkel der zumindest einen Striegelanordnung (34) um die Schwenkachse (72) durch einen Anschlag (68) begrenzt ist; und
wobei der Anschlag (68) durch einen Anschlagsabschnitt des Trägerelements (64) ausgebildet ist, wobei sich der Anschlagsabschnitt des Trägerelements (64) an den U-förmigen Abschnitt des Trägerelements anschließt.

2. Sämaschine (10) nach Anspruch 1, **dadurch gekennzeichnet, dass** die Schwenkachse (72) gegenüber der Fahrtrichtung (18) zur Horizontalen geneigt ist.

3. Sämaschine (10) nach Anspruch 1 oder 2, **dadurch gekennzeichnet, dass** die zumindest eine Striegelanordnung (34) über eine Halterung (38), vorzugsweise federnd, an einem Querbalken (40) befestigt ist.

4. Sämaschine (10) nach Anspruch 1 oder 2, **dadurch gekennzeichnet, dass** die zumindest eine Striegelanordnung (34) über eine Halterung, vorzugsweise federnd, an einer der mehreren Säschare (24) befestigt ist.

5. Sämaschine (10) nach Anspruch 3 oder 4, **dadurch gekennzeichnet, dass** das Gelenk (48) an der Halterung angeordnet ist.

6. Sämaschine (10) nach einem der Ansprüche 3 bis 5, **dadurch gekennzeichnet, dass** das Gelenk (48) mit der Halterung zerstörungsfrei und reversibel lösbar verbunden ist.

7. Sämaschine (10) nach einem der vorstehenden Ansprüche, **dadurch gekennzeichnet, dass** das Gelenk (48) mit der zumindest einen Striegelanordnung (34) zerstörungsfrei und reversibel lösbar verbunden ist.

8. Sämaschine (10) nach einem der vorstehenden Ansprüche, **dadurch gekennzeichnet, dass** die zumindest eine Striegelanordnung (34) exakt zwei beabstandet voneinander angeordnete Striegelelemente (50) aufweist.

9. Sämaschine (10) nach Anspruch 8, **dadurch gekennzeichnet, dass** die zwei Striegelelemente (50) der zumindest einen Striegelanordnung (34) jeweils als Rollenstriegel ausgebildet sind und eine gemeinsame Drehachse (70) aufweisen.

10. Sämaschine (10) nach Anspruch 8 oder 9, **dadurch gekennzeichnet, dass** die Schwenkachse (72) der zumindest einen Striegelanordnung (34) mittig zwischen den zwei Striegelelementen (50) der zumindest einen Striegelanordnung (34) verläuft.

## Claims

1. Sowing machine (10) for dispensing seeds and/or fertilizers, comprising
- a plurality of drill coulters (24) for depositing the seeds and/or fertilizer; and
- a plurality of harrow elements (50) for embedding the deposited seeds and/or fertilizer;
wherein the harrow elements (50) are each formed as roller harrows,
and wherein at least one harrow arrangement (34), which comprises one or more harrow elements (50), can be pivoted by means of a joint (48) about a pivot axis (72) which extends within a vertical plane oriented in the direction of travel (18)
**characterized in that** the joint (48) has a support element (64) with a U-shaped section, wherein
the pivot angle of the at least one harrow arrangement (34) about the pivot axis (72) is limited by a stop (68); and
wherein the stop (68) is formed by a stop section of the support element (64), wherein the stop section of the support element (64) adjoins the U-shaped section of the support element.

2. Sowing machine (10) according to Claim 1, **characterized in that** the pivot axis (72) is inclined towards the direction of travel (18) with respect to the horizontal.

3. Sowing machine (10) according to Claim 1 or 2, **characterized in that** the at least one harrow arrangement (34) is fixed, preferably resiliently, to a transverse beam (40) via a holder (38).

4. Sowing machine (10) according to Claim 1 or 2, **characterized in that** the at least one harrow arrangement (34) is fixed, preferably resiliently, to one of the plurality of drill coulters (24) via a holder.

5. Sowing machine (10) according to Claim 3 or 4, **characterized in that** the joint (48) is arranged on the holder.

6. Sowing machine (10) according to one of Claims 3 to 5, **characterized in that** the joint (48) is connected to the holder non-destructively and reversibly detachably.

7. Sowing machine (10) according to one of the preceding claims, **characterized in that** the joint (48) is connected to the at least one harrow arrangement (34) non-destructively and reversibly detachably.

8. Sowing machine (10) according to one of the preceding claims, **characterized in that** the at least one harrow arrangement (34) has exactly two harrow elements (50) arranged at a distance from each other.

9. Sowing machine (10) according to Claim 8, **characterized in that** the two harrow elements (50) of the at least one harrow arrangement (34) are each formed as roller harrows and have a common axis of rotation (70).

10. Sowing machine (10) according to Claim 8 or 9, **characterized in that** the pivot axis (72) of the at least one harrow arrangement (34) extends centrally between the two harrow elements (50) of the at least one harrow arrangement (34).

## Revendications

1. Semoir (10) destiné à l'épandage de semences et/ou d'engrais, le semoir comprenant
- plusieurs socs semeurs (24) destinés à déposer les semences et/ou l'engrais ; et
- plusieurs éléments de herse (50) destinés à incorporer les semences et/ou l'engrais déposés ;
les éléments de herse (50) étant chacun conçus comme une herse à rouleaux, et
au moins un ensemble de herse (34) qui comprend un ou plusieurs éléments de herse (50) pouvant pivoter à l'aide d'une articulation (48) sur un axe de pivotement (72) qui s'étend dans un plan vertical orienté dans le sens de déplacement (18) ;
**caractérisé en ce que** l'articulation (48) comporte un élément porteur (64) pourvu d'une portion en forme de U,
l'angle de pivotement de l'au moins un ensemble de herse (34) sur l'axe de pivotement (72) étant limité par une butée (68) ; et
la butée (68) étant formée par une portion de butée de l'élément porteur (64), la portion de butée de l'élément porteur (64) étant raccordée à la portion en forme de U de l'élément porteur.

2. Semoir (10) selon la revendication 1, **caractérisé en ce que** l'axe de pivotement (72) est incliné par rapport au sens de déplacement (18) par rapport à l'horizontale.

3. Semoir (10) selon la revendication 1 ou 2, **caractérisé en ce que** l'au moins un ensemble de herse (34) est fixé à une traverse (40), de préférence élastiquement, par le biais d'un support (38).

4. Semoir (10) selon la revendication 1 ou 2, **caractérisé en ce que** l'au moins un ensemble de herse (34) est fixé, de préférence élastiquement, à un soc semeur de la pluralité de socs semeurs (24) par le biais d'un support.

5. Semoir (10) selon la revendication 3 ou 4, **caractérisé en ce que** l'articulation (48) est disposée sur le support.

6. Semoir (10) selon l'une des revendications 3 à 5, **caractérisé en ce que** l'articulation (48) est reliée au support de manière non destructive, amovible et réversible.

7. Semoir (10) selon l'une des revendications précédentes, **caractérisé en ce que** l'articulation (48) est reliée à l'au moins un ensemble de herse (34) de manière non destructive, amovible et réversible.

8. Semoir (10) selon l'une des revendications précédentes, **caractérisé en ce que** l'au moins un ensemble de herse (34) comporte exactement deux éléments de herse (50) disposés à distance l'un de l'autre.

9. Semoir (10) selon la revendication 8, **caractérisé en ce que** les deux éléments de herse (50) de l'au moins un ensemble de herse (34) sont conçus chacun comme une herse à rouleaux et comportent un axe de rotation commun (70) .

10. Semoir (10) selon la revendication 8 ou 9, **caractérisé en ce que** l'axe de pivotement (72) de l'au moins un ensemble de herse (34) s'étend centralement entre les deux éléments de herse (50) de l'au moins un dispositif de herse (34).
